# EUROPEAN PATENT SPECIFICATION

(11) **EP 0 669 707 B1**
(45) Date of publication and mention of the grant of the patent: **13.05.1998**
(21) Application number: 95102530.3
(22) Date of filing: 22.02.1995
(51) Int. Cl.: H02P 8/32, H02P 8/00, B60G 17/015

(54) **Method of driving stepping motor**
Steuerungsverfahren für einen Schrittmotor
Procédé de commande d'un moteur pas-à-pas

(30) Priority: 24.02.1994 JP 26946/94
(43) Date of publication of application: 30.08.1995
(73) Proprietor: UNISIA JECS CORPORATION, Atsugi-shi, Kanagawa 243 (JP)
(72) Inventor: Hiramoto, Michiya, c/o Unisia Jecs Corp., Atsugi-shi, Kanagawa 243 (JP)
(74) Representative: Grünecker, Kinkeldey, Stockmair & Schwanhäusser Anwaltssozietät

(56) References cited:
- DE-A- 2 128 347
- JP-A-64 040 712
- US-A- 4 864 198
- US-A- 5 283 510
- US-A- 5 321 340

## Description

The present invention relates to a method of driving and a shock absorber having a stepping motor and more particularly, to a technique of restraining vibration of the stepping motor during drive thereof.

Conventionally, the stepping motor is used in a variable-damping-force-type shock absorber disclosed, for example, in JP-U 64-40712.

This shock absorber includes a rotary valve having changeable damping force characteristic, and a stepping motor mounted at an upper end of the shock absorber so as to rotate the rotary valve.

As for the conventional variable-damping-force-type shock absorber, however, when driving the stepping motor, noise is produced by vibration thereof, which may cause a seat occupant to have a strange feeling, resulting in lowering the cruising comfort.

US-A- 4,864,198 discloses a D.C. brushless motor having rotor and stator windings which are alternatively excited by two-phase and three-phase currents.

It is the object of the present invention to provide a method of driving and a shock absorber having a stepping motor which contributes to a restraint of generation of vibration during drive thereof.

This object is solved by a method having the steps of claim 1 and by a shock absorber comprising the features of claim 3.
Fig. 1 is a diagrammatic sectional view showing a variable-damping-force-type shock absorber for a motor vehicle to which the present invention is applied;
Fig. 2 is a table showing an excitation order of the stepping motor according to the present invention;
Fig. 3A is a chart showing a vibration waveform of the stepping motor when driven by one step in three-phase excitation;
Fig. 3B is a view similar to Fig. 3A, when driven by one step in two-phase excitation;
Fig. 4A is a view similar to Fig. 3B, showing vibration waveforms of the stepping motor in four steps when having a two-phase excitation start;
Fig. 4B is a view similar to Fig. 4A, when having a three-phase excitation start;
Fig. 5A is a view similar to Fig. 4B, showing a composite waveform of the vibration waveforms in the four steps in Fig. 4A;
Fig. 5B is a view similar to Fig. 5A, showing a composite waveform of the vibration waveforms in the four steps in Fig. 4B;
Fig. 6A is a view similar to Fig. 5B, showing a result of measurement of consumed current of the stepping motor and vibration in the direction of rotation thereof when having a three-phase excitation start; and
Fig. 6B is a view similar to Fig. 6A, when having a two-phase excitation start.

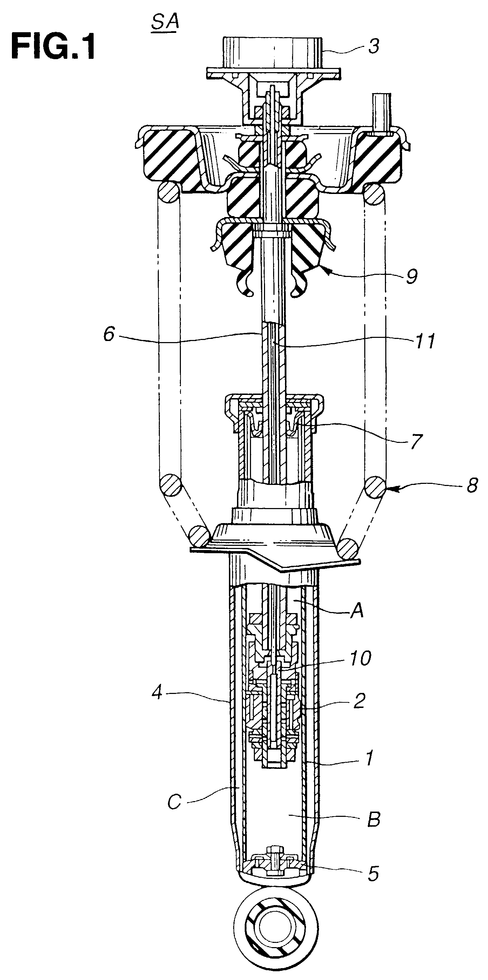

Referring to Fig. 1, there is shown a variable-damping-force-type shock absorber for a motor vehicle, generally designated by SA, to which a method of driving a stepping motor according to the present invention is applied.

The shock absorber SA includes a cylinder 1, a piston 2 serving to define an upper chamber A and a lower chamber B of the cylinder 1, an outer tube 4 serving to form a reservoir chamber C at the outer periphery of the cylinder 1, a base 5 serving to define the lower chamber B and the reservoir chamber C, a guide member 7 serving to slidably guide a piston rod 6 connected to the piston 2, a suspension spring 8 interposed between the outer tube 4 and a vehicular body (not shown), and a bumper rubber 9. Moreover, the shock absorber SA includes a rotary valve 10 having changeable damping force characteristic arranged within the piston rod 6, and a stepping motor 3 mounted at an upper end of the shock absorber SA so as to rotate the rotary valve 10 through a control rod 11.

In this embodiment, the stepping motor 3 is of the three-phase type having three excitation phases and 330Hz vibration resonance frequency during drive thereof. As for an excitation method upon step drive of the stepping motor 3, a 2-3 phases excitation method is used which alternately repeats two-phase excitation for simultaneously exciting first and second phases, and three-phase excitation for simultaneously exciting first to third phases.

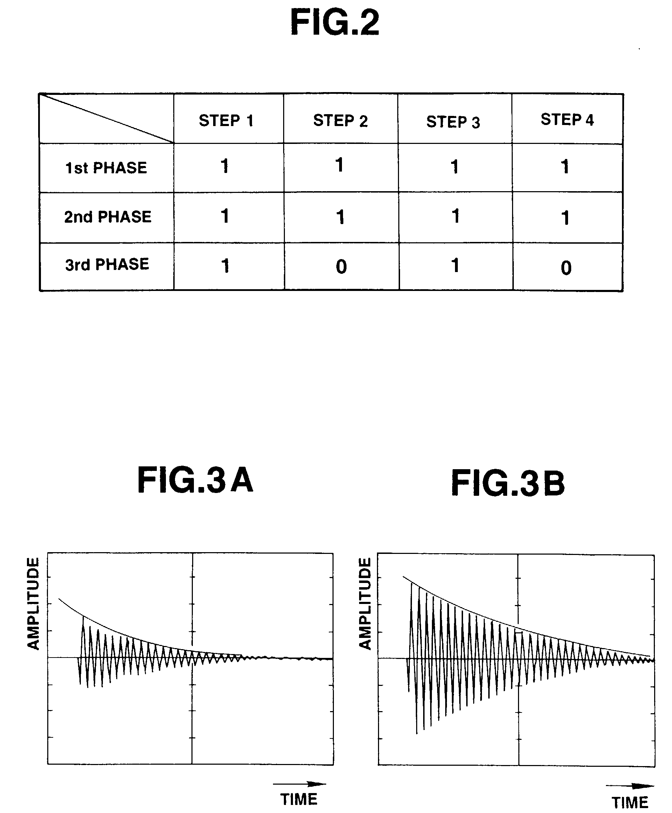

Referring to Fig. 2, in this embodiment, in connection of a start of driving the stepping motor 3, the following excitation order is adopted. A first step (STEP 1) concerns three-phase excitation, i.e. a three-phase excitation start is carried out. A second step (STEP 2) concerns two-phase excitation, and a third step (STEP 3) concerns three-phase excitation. In a hold position after four-step shift (STEP 4), the stepping motor 3 is in two-phase excitation. It is understood that excitation is carried out in order of three phases → two phases → three phases → two phases.

Next, a description will be made with regard to a determination of the above excitation order.

Fig. 3A shows a vibration waveform of the stepping motor 3 when driven by one step in three-phase excitation, and Fig. 3B shows a vibration waveform of the stepping motor 3 when driven by one step in two-phase excitation. As shown in Figs. 3A and 3B, a difference is found between the two vibration waveforms. Since three-phase excitation and two-phase excitation have different torque, stiffness characteristic, etc., a difference is produced in the amplitude and characteristic frequency of vibration, which results in the above difference between the two vibration waveforms.

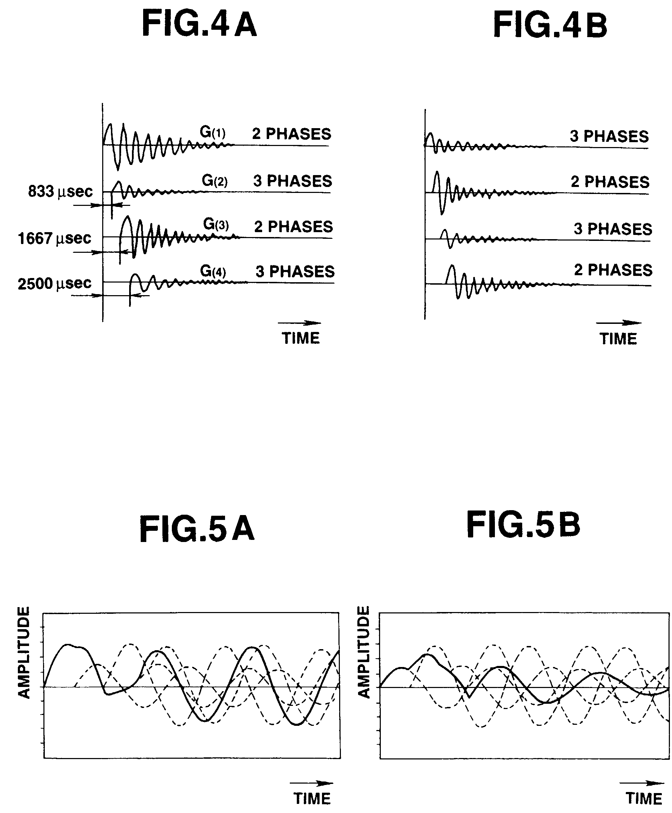

Fig. 4A shows vibration waveforms in four steps (STEP 1 to STEP 4) when having at 1200pps a two-phase excitation start and a hold in three-phase excitation, and Fig. 4B shows vibration waveforms in four steps (STEP 1 to STEP 4) when having at 1200pps a three-phase excitation start and a hold in two-phase excitation. The excitation interval between the two adjacent steps or drive interval of the stepping motor 3 is determined by a drive frequency of the stepping motor 3.

Referring to Figs. 5A and 5B, heavy solid lines indicate composite waveforms of the vibration waveforms in the four steps in Figs. 4A and 4B, respectively. It will be understood from Figs. 5A and 5B that in case of four-step shift at 1200pps, a method of three-phase excitation start and hold in two-phase excitation (Fig. 5B) has smaller amplitude of the composite waveform than a method of two-phase excitation start and hold in three-phase excitation (Fig. 5A), and thus produces an effect of reducing noise and vibration of the stepping motor 3.

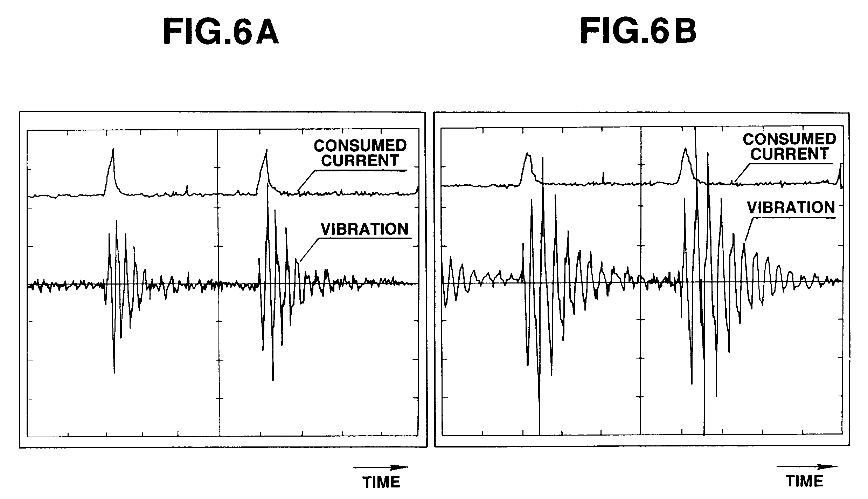

Referring to Figs. 6A and 6B, there are given results of measurement of consumed current of the stepping motor 3 and vibration in the direction of rotation thereof. Fig. 6A shows a result when having a three-phase excitation start and a hold in two-phase excitation, and Fig. 6B shows a result when having a two-phase excitation start and a hold in three-phase excitation. The results of measurement reveal that in a pattern of carrying out a hold after four-step shift, the method of three-phase excitation start and hold in two-phase excitation has smaller vibration during drive of the stepping motor 3 and shorter time required for attenuation of vibration than the method of two-phase excitation start and hold in three-phase excitation, and thus produces an effect of reducing vibration of the stepping motor 3 upon initialization.

For the reason as described above, in this embodiment, the method of three-phase excitation start and hold in two-phase excitation having smaller composite waveform is adopted to restrain generation of vibration of the stepping motor 3 upon drive thereof.

By way of example, in this embodiment, the stepping motor 3 is of the three-phase type, and subjected to the 2-3 phases excitation method. Alternatively, the number of excitation phases may be two, and the other excitation method such as a 1-2 phases excitation method or a 2-2 phases excitation method may be adopted regardless of the number of excitation phases.

## Claims

1. A method of driving a stepping motor (3) comprising the steps of:
excitation of the stepping motor with a first pattern (51) having a first number of phases;
performing subsequent excitation of the stepping motor with a second pattern (52) having a second number of phases, said second number being smaller than said first number;
performing subsequent excitation of the stepping motor with said first pattern; and
performing subsequent excitation of the stepping motor with said second pattern,
**characterised in that**
the stepping motor (3) is restarted always with excitation with said first pattern.

2. A method as claimed in claim 1, wherein said first number of phases is three, and said second number of phases is two.

3. A shock absorber for a motor vehicle comprising:
means (10) for allowing change in damping force;
a stepping motor (3) mounted to said shock absorber at one end thereof, said stepping motor serving to rotate said change allowing means (10) of said shock absorber; and
means for driving said stepping motor (3) by a plurality of steps,
**characterised in that** said driving means comprises:
means for starting excitation of said stepping motor (3) with a first pattern (51) having a first number of phases;
means for performing subsequent excitation of said stepping motor (3) with a second pattern (52) having a second number of phases, said second number being smaller than said first number;
means for performing subsequent excitation of said stepping motor (3) with said first pattern;
means for performing subsequent excitation of said stepping motor with said second pattern, and
means for restarting said stepping motor (3) always with excitation with said first pattern.

4. The shock absorber as claimed in claim 3, wherein said first number of phases is three and said second number of phases is two.

## Patentansprüche

1. Verfahren zum Antreiben eines Schrittmotors (3), das die folgenden Schritte umfaßt:
Erregen des Schrittmotors mit einer ersten Abfolge (S1) in einer ersten Anzahl von Phasen;
anschließendes Ausführen der Erregung des Schrittmotors mit einer zweiten Abfolge (52) mit einer zweiten Anzahl von Phasen, wobei die zweite Anzahl geringer ist als die erste Anzahl;
anschließendes Ausführen der Erregung des Schrittmotors mit der ersten Abfolge; und
anschließendes Erregen des Schrittmotors mit der zweiten Abfolge,
**dadurch gekennzeichnet**, daß
der Schrittmotor (3) stets durch Erregung mit der ersten Abfolge wieder in Gang gesetzt wird.

2. Verfahren nach Anspruch 1, wobei die erste Anzahl von Phasen drei beträgt, und die zweite Anzahl von Phasen zwei beträgt.

3. Stoßdämpfer für ein Kraftfahrzeug, der umfaßt:
eine Einrichtung (10), mit der die Dämpfkraft verändert werden kann;
einen Schrittmotor (3), der an dem Stoßdämpfer an einem Ende desselben angebracht ist, wobei der Schrittmotor dazu dient, die Einrichtung (10) des Stoßdämpfers, die Veränderung ermöglicht, zu drehen; und
eine Einrichtung, mit der der Schrittmotor (3) mit einer Vielzahl von Schritten angetrieben wird,
**dadurch gekennzeichnet**, daß die Antriebseinrichtung umfaßt:
eine Einrichtung, mit der die Erregung des Schrittmotors (3) mit einer ersten Abfolge (51) mit einer ersten Anzahl von Phasen ausgelöst wird;
eine Einrichtung, mit der der Schrittmotor (3) anschließend mit einer zweiten Abfolge (52) mit einer zweiten Anzahl von Phasen erregt wird, wobei die zweite Anzahl kleiner ist als die erste Anzahl;
eine Einrichtung, mit der der Schrittmotor (3) anschließend mit der ersten Abfolge erregt wird;
eine Einrichtung, mit der der Schrittmotor (3) mit der zweiten Abfolge erregt wird, und
eine Einrichtung, mit der der Schrittmotor (3) stets in Erregung mit der ersten Abfolge wieder in Gang gesetzt wird.

4. Stoßdämpfer nach Anspruch 3, wobei die erste Anzahl von Phasen drei beträgt und die zweite Anzahl von Phasen zwei beträgt.

## Revendications

1. Procédé de commande d'un moteur pas-à-pas (3) comprenant les étapes consistant à :
exciter le moteur pas-à-pas suivant un premier schéma (S1) ayant un premier nombre de phases;
procéder à une excitation suivante du moteur pas-à-pas suivant un deuxième schéma (S2) ayant un deuxième nombre de phases, ledit deuxième nombre étant plus petit que ledit premier nombre;
procéder à une excitation suivante du moteur pas-à-pas avec ledit premier schéma; et
procéder à une excitation suivante du moteur pas-à-pas avec ledit deuxième schéma,
caractérisé en ce que
le moteur pas-à-pas (3) est redémarré toujours avec l'excitation selon ledit premier schéma.

2. Procédé selon la revendication 1, où ledit premier nombre de phases est de trois, et ledit deuxième nombre de phases est de deux.

3. Amortisseur de chocs pour un véhicule moteur comprenant :
un moyen (10) pour permettre un changement de la force d'amortissement;
un moteur pas-à-pas (3) monté sur ledit amortisseur à une extrémité de celui-ci, ledit moteur pas-à-pas étant destiné à faire tourner ledit moyen permettant le changement (10) dudit amortisseur; et
un moyen pour entraîner ledit moteur pas-à-pas (3) par une pluralité de pas,
caractérisé en ce que ledit moyen d'entraînement comprend :
un moyen pour commencer l'excitation dudit moteur pas-à-pas (3) suivant un premier schéma (S1) ayant un premier nombre de phases;
un moyen pour procéder à une excitation suivante dudit moteur pas-à-pas (3) selon un deuxième schéma (S2) ayant un deuxième nombre de phases, ledit deuxième nombre étant plus petit que ledit premier nombre;
un moyen pour procéder à une excitation suivante dudit moteur pas-à-pas (3) selon ledit premier schéma;
un moyen pour procéder à une excitation suivante dudit moteur pas-à-pas selon ledit deuxième schéma, et
un moyen pour faire redémarrer ledit moteur pas-à-pas (3) toujours avec l'excitation selon ledit premier schéma.

4. Amortisseur de chocs selon la revendication 3, où ledit premier nombre de phases est de trois, et ledit deuxième nombre de phases est de deux.
